# EUROPÄISCHE PATENTANMELDUNG

(11) **EP 1 227 414 A2**
(43) Veröffentlichungstag der Anmeldung: **31.07.2002**
(21) Anmeldenummer: 02002142.4
(22) Anmeldetag: 29.01.2002
(51) Int. Cl.: G06F 17/30

(54) **Datenverarbeitungssystem und Verfahren zur Bewirtschaftung von in zumindest einer Datenbank organisierten Datenbeständen eines Nutzers**

(30) Priorität: 30.01.2001 DE 10105206
(71) Anmelder: Uniserv GmbH für Unternehmensberatung, Softwareentwicklung und Datenverarbeitung, 75179 Pforzheim (DE)
(72) Erfinder: Pfeiffer, Roland, 76277 Karlsruhe (DE); Eichhorn, Walter, 76137 Karlsruhe (DE)
(74) Vertreter: Lindner, Michael, Dipl.-Ing.

(57) **Zusammenfassung**

Die Erfindung betrifft ein Datenverarbeitungssystem zur Bewirtschaftung von in zumindest einer Datenbank (Benutzerdatenbank) (27) organisierten Datenbeständen eines Nutzers, die insbesondere Adreß- und/ oder Personendaten umfassen, mit einer Rechnereinrichtung (22) zur Verarbeitung von Daten, einer ersten Speichereinrichtung (26), die der Rechnereinrichtung (22) zugeordnet und zur Speicherung der Benutzerdatenbank (27) ausgelegt ist, einer zweiten Speichereinrichtung (32), die zur Speicherung einer Referenzdatenbank (34) ausgelegt ist, und einer Zugriffseinrichtung (30) zur Steuerung der Zugriffe auf die Referenzdatenbank (34) auf der Grundlage eines angefragten Datums und zur Steuerung des Auslesens von aus einzelnen Daten bestehenden Datenobjekten aus der Referenzdatenbank. Das Datenverarbeitungssystem zeichnet sich dadurch aus, daß die Zugriffseinrichtung (30) derart ausgebildet ist, daß sie ein Datenobjekt aus der Referenzdatenbank (34) nur dann ausliest, wenn eine Übereinstimmung zwischen dem angefragten Datum und einem entsprechendem Datum des Datenobjekts festgestellt wird, und die Zugriffseinrichtung (30) und die zweite Speichereinrichtung (34) im lokalen Bereich (12) des Nutzers liegen (Fig. 1).

## Beschreibung

Die Erfindung betrifft ein Datenverarbeitungssystem zur Bewirtschaftung von in zumindest einer Datenbank (Benutzerdatenbank) organisierten Datenbeständen eines Nutzers, die insbesondere Adreß- und/oder Personendaten umfassen, mit einer Rechnereinrichtung zur Verarbeitung von Daten, einer ersten Speichereinrichtung, die der Rechnereinrichtung zugeordnet und zur Speicherung der Benutzerdatenbank ausgelegt ist, einer zweiten Speichereinrichtung, die zur Speicherung einer Referenzdatenbank ausgelegt ist, und einer Zugriffseinrichtung zur Steuerung der Zugriffe auf die Referenzdatenbank auf der Grundlage eines angefragten Datums und zur Steuerung des Auslesens von aus einzelnen Daten bestehenden Datenobjekten aus der Referenzdatenbank.

Die Erfindung betrifft ferner ein Verfahren zur Bewirtschaftung von in zumindest einer Datenbank (Benutzerdatenbank) organisierten Datenbeständen eines Nutzers.

Datenverarbeitungssysteme der vorgenannten Art sind bekannt. Sie werden dazu eingesetzt, große Datenbestände, insbesondere Personen- und Adreß-Datenbestände, zu bewirtschaften, wobei unter dem Begriff "Bewirtschaften" u.a. das Verifizieren, Korrigieren, Aktualisieren und Anreichern von Datenbeständen zu verstehen ist.

In zunehmendem Maße sind nicht nur große nationale oder international tätige Unternehmen darauf angewiesen, daß deren Personen- und Adreßdatenbestände immer auf dem aktuellsten Stand sind, um Kosten beispielsweise für die Doppeltverschickung von Unterlagen zu vermeiden. Zusätzliche Kosten entstehen solchen Unternehmen auch dann, wenn beispielsweise bei der Eingabe neuer Personen- oder Adreßdaten Fehler gemacht werden.

Aus der Druckschrift WO 99/06914 ist ein Verfahren und ein System zur Aktualisierung von Daten bekannt. In dieser Druckschrift wird vorgeschlagen, einen sogenannten Schlüssel einzuführen, der die gesamten Daten eines Datenlieferanten eindeutig kennzeichnet. Dieser eindeutige Schlüssel wird dann auch zur eindeutigen Identifizierung der Daten eines Benutzers (Kunde des Datenlieferanten) eingesetzt. Über diesen Schlüssel ist es möglich, eine Verknüpfung der Benutzerdatenbestände zu den Referenzdatenbeständen des Datenlieferanten herzustellen.

Dieses System ermöglicht es nun dem Benutzer, einen Schlüssel an den Datenlieferanten beispielsweise per Internet zu übermitteln, um mit diesem Schlüssel verknüpfte Daten, beispielsweise Zusatzdaten zu einer Person oder eine Adresse, anzufordern. Darüber hinaus läßt dieses System eine Verifikation von neuen Daten zu, die hierfür an den Datenlieferanten übermittelt werden müssen. Dort wird anhand der Referenzdatenbestände geprüft, ob die übermittelten Daten existieren, und wenn ja, wird ein zugehöriger Schlüssel zurückgeliefert.

Ein Nachteil dieses Systems ist insbesondere darin zu sehen, daß die Daten des Benutzers zur Verifizierung und Aktualisierung dessen Sphäre verlassen müssen. Damit ist es dem Datenlieferanten möglich, sich ein Bild von den Datenbeständen des Kunden zu machen. Dies ist unter datenschutzrechtlichen Aspekten sehr bedenklich.

Eine Aufgabe der vorliegenden Erfindung besteht deshalb darin, ein Datenverarbeitungssystem der eingangs genannten Art so weiterzubilden, daß die bestehenden strengen Datenschutzrichtlinien eingehalten werden.

Die der Erfindung zugrunde liegende Aufgabe wird bei dem eingangs genannten Datenverarbeitungssystem dadurch gelöst, daß die Zugriffseinrichtung derart ausgebildet ist, daß sie ein Datenobjekt aus der Referenzdatenbank nur dann ausliest, wenn eine Übereinstimmung zwischen dem angefragten Datum und einem entsprechenden Datum des Datenobjekts festgestellt wird, und daß die Zugriffseinrichtung und die zweite Speichereinrichtung im lokalen Bereich des Nutzers liegen.

Ein Vorteil dieses Datenverarbeitungssystems ist darin zu sehen, daß eine Übermittlung von Daten des Nutzers zu dem Datenlieferanten nicht mehr notwendig ist. Vielmehr erhält der Nutzer von dem Datenlieferanten einen vollständigen Datenbestand, um diesen in sein System einzuspielen. Um zu verhindern, daß der Nutzer die vom Datenlieferanten zur Verfügung gestellten Referenzdaten exportieren oder ausspähen kann, ist die Zugriffseinrichtung vorgesehen, die die Zugriffe und das Auslesen aus der Referenzdatenbank steuert. Für den Nutzer stellt die Referenzdatenbank ein gekapseltes System dar, aus dem nur jene Daten bzw. damit verknüpfte Daten ausgelesen werden können, die der Nutzer zumindest teilweise schon besitzt bzw. kennt. Handelt es sich bei der Benutzerdatenbank beispielsweise um eine Adreß- und Personendatenbank, kann der Nutzer auf die Referenzdatenbank nur unter Angabe einer Person und einer Adresse zugreifen. Die Zugriffseinrichtung sorgt dann dafür, daß der Nutzer eine Statusmeldung über die Richtigkeit dieser Angaben erhält und beispielsweise Zusatzdaten zu der angegebenen Person, die mit diesem in der Referenzdatenbank verknüpft sind. Die Zugriffseinrichtung verhindert jedoch das Ausspähen der Referenzdatenbank beispielsweise dadurch, daß bei einer unvollständigen oder nicht vollkommen korrekten Angabe von Personen- bzw. Adreßdaten dem Nutzer keine Auswahl verschiedener Referenzdaten angeboten wird.

Es zeigt sich daraus, daß das erfindungsgemäße Datenverarbeitungssystem die Belange des Datenschutzes berücksichtigt, da einerseits der Datenlieferant keine Kenntnis von dem Datenbestand des Kunden erhält und andererseits der Nutzer/Kunde die Datenbestände der Referenzdatenbank weder exportieren noch ausspähen kann.

In einer bevorzugten Weiterbildung des Datenverarbeitungssystems weist die Zugriffseinrichtung eine Entschlüsselungsvorrichtung zur Entschlüsselung der in der zweiten Speichereinrichtung verschlüsselt abgelegten Daten der Referenzdatenbank auf.

Diese Maßnahme hat den Vorteil, daß durch die Verschlüsselung der Referenzdaten ein unerlaubtes Exportieren von Daten oder Ausspähen von Daten weiter erschwert wird.

In einer bevorzugten Weiterbildung umfaßt die Zugriffseinrichtung ein Lesegerät zum Einlesen von Daten von einem mobilen Datenträger in die zweite Speichereinrichtung.

Damit ist es möglich, die vollständigen Referenzdaten per DVD oder per Datenband vom Datenlieferant zu erhalten und diese dann in das eigene System des Nutzers einzuspielen, so daß teure Online-Verbindungen etc. nicht erforderlich sind.

In einer bevorzugten Weiterbildung ist ein Mittel zur eindeutigen Kennzeichnung des Datenobjekts der Benutzerdatenbank durch eine Referenz-ID vorgesehen, die in der Referenzdatenbank dem jeweiligen Datenobjekt zugeordnet ist.

Diese Maßnahme hat den Vorteil, daß der Einsatz einer eindeutigen unveränderlichen Referenz-ID (Schlüssel) zu einer Vereinfachung der Bewirtschaftung der Benutzerdatenbank führt. Da die Referenz-ID eindeutig und im wesentlichen stabil ist, reicht zum Abgleich der Benutzerdaten mit den Referenzdaten ein Austausch dieser Referenz-ID aus. Darüber hinaus ist eine Verknüpfung mit anderen Datenbanken, die Zusatzdaten enthalten, einfacher realisierbar.

In einer bevorzugten Weiterbildung umfaßt die Zugriffseinrichtung ein Mittel zur Codierung der Referenz-ID der Referenzdatenbank, wobei die Codierung nach einem vom Benutzer nicht veränderbaren Codierungsschema erfolgt.

Diese Maßnahme hat den Vorteil, daß der Lieferant der Referenzdatenbank durch eine unterschiedliche Codierung der Referenz-IDs verhindern kann, daß unterschiedliche Nutzer ihre Benutzerdatenbanken über die Referenz-ID miteinander verknüpfen können. Dies ist insbesondere unter datenschutzrechtlichen Gesichtspunkten von Vorteil.

Die der Erfindung zugrunde liegende Aufgabe wird auch von einem Verfahren zur Bewirtschaftung von in zumindest einer Datenbank (Benutzerdatenbank) organisierten Datenbeständen eines Nutzers gelöst, das folgende Schritte umfaßt:
- Speichern der Benutzerdatenbank in einer ersten Speichereinrichtung,
- Speichern einer Referenzdatenbank in einer zweiten Speichereinrichtung, wobei die zweite Speichereinrichtung im lokalen Bereich des Benutzers liegt, und
- Steuern der Zugriffe auf die Referenzdatenbank auf der Grundlage eines angefragten Datums und Steuern des Auslesens von aus einzelnen Daten bestehenden Datenobjekten aus der Referenzdatenbank, wobei das Steuern derart ausgeführt wird, daß ein Datenobjekt aus der Referenzdatenbank nur dann ausgelesen wird, wenn eine Übereinstimmung zwischen dem angefragten Datum und einem entsprechenden Datum des Datenobjekts festgestellt wird.

Das heißt mit anderen Worten, daß der Nutzer aus der Referenzdatenbank nur zu jenen Datenobjekten Informationen auslesen kann, über deren Existenz er Kenntnis hat, weil er diese bereits in der Benutzerdatenbank gespeichert hat oder im Begriff ist, diese dort zu speichern. Damit läßt sich verhindern, daß der Benutzer beliebige Referenzdaten exportiert oder Referenzdaten ausspäht. Vielmehr verhält sich die Referenzdatenbank wie ein gekapseltes System, auf das nur sehr eingeschränkt zugegriffen werden kann.

Da die Referenzdatenbank im Bereich des Nutzers liegt, d.h. nicht beim Datenlieferanten, muß der Nutzer zur Pflege seiner Datenbestände keine Daten an den Datenlieferanten übermitteln.

In einer bevorzugten Weiterbildung des Verfahrens wird jedem Datenobjekt der Benutzerdatenbank eine eindeutige Referenz-ID zugeordnet, die für dieses Datenobjekt in der Referenzdatenbank enthalten ist. Als Datenobjekt werden in diesem Zusammenhang mehrere miteinander verknüpfte Einzeldaten verstanden, also beispielsweise das Datenobjekt Person mit den Einzeldaten "Vornamen", "Nachnamen" etc. Darüber hinaus kann ein solches Datenobjekt Verweise auf andere Datenobjekte, wie beispielsweise "Zustelladresse" oder "Adresse" aufweisen. Schließlich können Datenobjekte weitere Einzeldaten, wie Versionsnummer, Änderungsdatum, frühere Daten (Historie) aufweisen.

Es ist weiter bevorzugt, die in der Referenzdatenbank enthaltene Referenz-ID beim Auslesen nach einem vorgegebenen Schema in eine benutzerabhängige eindeutige neue Referenz-ID zu codieren.

Das heißt mit anderen Worten, daß die vom Nutzer verwendete Referenz-ID nutzerabhängig ist und mit der in der Referenzdatenbank gespeicherten Referenz-ID nicht .übereinstimmt. Damit können Benutzerdatenbanken verschiedener Nutzer nicht über eine gemeinsame Referenz-ID miteinander verknüpft werden, da diese unterschiedlich codiert sind. Selbstverständlich ist es auch möglich, auf Lieferantenseite unterschiedlich codierte Referenz-IDs bereitzustellen, so daß die Codierung beim Nutzer entfallen kann.

In einer bevorzugten Weiterbildung wird bei Eingabe eines Datums, vorzugsweise Personen- und Adreßangaben, in der Referenzdatenbank nach diesem Datum fehlertolerant gesucht, wird eine Statusmeldung darüber generiert, ob das Datum gefunden oder nicht gefunden wurde und wird das in der Referenzdatenbank enthaltene Datum ausgegeben, falls sich das eingegebene Datum von dem Datum in der Referenzdatenbank unterscheidet. In diesem Zusammenhang bedeutet der Begriff "fehlertolerant", daß phonetische Fehler (bspw. Maier, Meier), Erfassungsfehler (bspw. Miaer statt Maier) und Abkürzungen (bspw. Dr. und Doktor) erkannt werden.

Diese Maßnahme verbessert die Nutzung der Referenzdatenbank für den Nutzer, ohne die Vorgaben des Datenschutzes zu verletzen. Mit Hilfe der fehlertoleranten Suche lassen sich Fehler bei der Eingabe von Daten erkennen und durch die in der Referenzdatenbank enthaltenen richtigen Daten ersetzen, wobei dem Nutzer jedoch bei Erkennen eines Fehlers keine Auswahl verschiedener möglicher Referenzdaten zur Verfügung gestellt wird. Damit läßt sich verhindern, daß der Nutzer die Referenzdatenbank "ausspäht".

In einer bevorzugten Weiterbildung werden die dem eingegebenen Datum in der Referenzdatenbank zugeordneten Daten ausgegeben. Das heißt mit anderen Worten, daß das gesuchte Datum des Nutzers mit zusätzlichen Daten aus der Referenzdatenbank angereichert wird. Handelt es sich beispielsweise bei dem eingegebenen und gesuchten Datum um eine Person, können zusätzliche Daten in der Referenzdatenbank beispielsweise Alter oder Beruf dieser Person sein.

In einer bevorzugten Weiterbildung werden die in der Benutzerdatenbank enthaltenen Daten anhand der in der Referenzdatenbank enthaltenen Daten aktualisiert. Vorzugsweise erfolgt die Zuordnung einer eindeutigen Referenz-ID zu einem Datenobjekt der Benutzerdatenbank für mehrere Benutzerdatenbanken, so daß anschließend eine Verknüpfung dieser Benutzerdatenbanken über die gemeinsame Referenz-ID möglich wird.

Besonders bevorzugt enthält die Referenzdatenbank Personen-, Haushalts- und Gebäudedaten, die miteinander verknüpft sind, wobei diesen Daten jeweils eine eigene eindeutige Referenz-ID zugeordnet ist.

Das heißt mit anderen Worten, daß die Referenzdatenbank Personen-IDs, Haushalts-IDs und Gebäude-IDs enthält. Diese unterschiedlichen Referenz-IDs ermöglichen einen optimierten Aufbau der Referenzdatenbank sowie eine vereinfachte Aktualisierung der Benutzerdatenbank.

In einer bevorzugten Weiterbildung wird zu jedem der Personen-, Haushalts- und Gebäudedaten eine Historie abgespeichert, um Änderungen der Daten verfolgen zu können.

Diese Maßnahme hat den Vorteil, daß beispielsweise Namensänderungen durch Heirat oder Adreßänderungen durch Umzug sehr einfach festgestellt werden können, da die Referenzdatenbank auch die älteren nicht mehr aktuellen Daten enthält.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand eines Ausführungsbeispiels mit Bezug auf die Zeichnung näher erläutert. Dabei zeigen:
- Fig. 1: eine schematische Darstellung eines erfindungsgemäßen Datenverarbeitungssystems;
- Fig. 2: ein schematisches Blockschaltdiagramm einer Zugriffseinrichtung; und
- Fig. 3: eine schematische Darstellung einer in der Referenzdatenbank eingesetzten Datenstruktur.

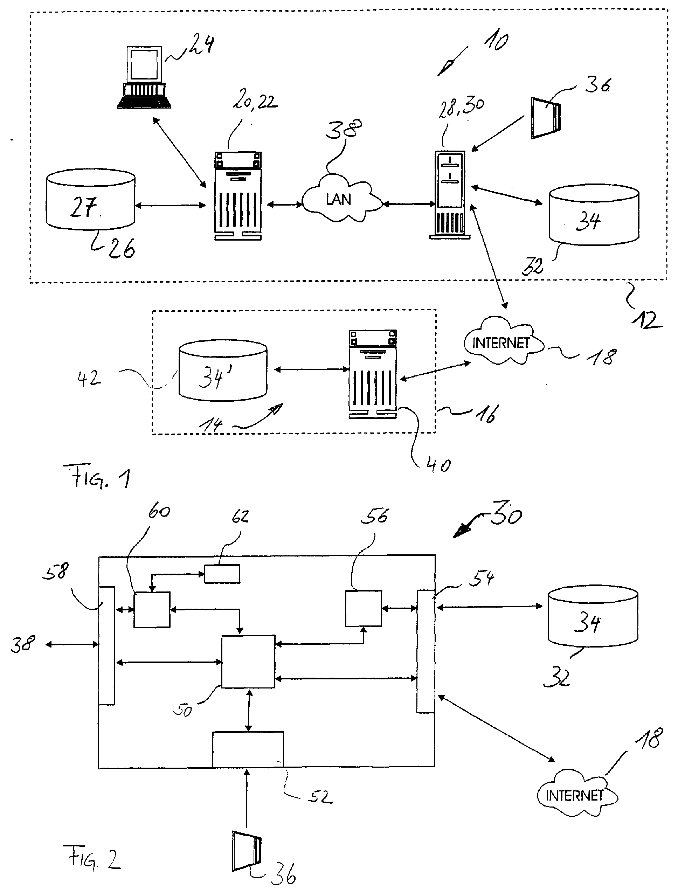

In Fig. 1 ist ein Datenverarbeitungssystem schematisch dargestellt und mit dem Bezugszeichen 10 gekennzeichnet. Das Datenverarbeitungssystem 10 ist mit einer gestrichelten Linie 12 umschlossen, um damit anzudeuten, daß die noch zu erläuternden Komponenten dieses Datenverarbeitungssystems 10 im Zugangsbereich (Sphäre) eines Benutzers liegen.

Fig. 1 zeigt ein weiteres Datenverarbeitungssystem, das mit dem Bezugszeichen 14 gekennzeichnet ist. Dieses Datenverarbeitungssystem ist mit einer gestrichelten Linie 16 umschlossen, um damit anzudeuten, daß dieses Datenverarbeitungssystem 14 im Zugangsbereich eines Providers (Datenlieferant), also nicht im Zugangsbereich des Nutzers, liegt. Eine Kommunikation der beiden Datenverarbeitungssysteme 10 und 14 ist jedoch beispielsweise über das Internet 18 möglich.

Das benutzerseitige Datenverarbeitungssystem 10 umfaßt einen Rechner 20, der beispielsweise als Server 22 in einem lokalen Netzwerk (LAN) dient. In einem solchen lokalen Netzwerk sind sogenannte Client-Stationen vorgesehen, wobei der Übersichtlichkeit wegen in Fig. 1 nur eine Client-Station dargestellt und mit dem Bezugszeichen 24 gekennzeichnet ist. Diese Client-Station 24 dient unter anderem zur Eingabe und Darstellung von Daten.

Solche Daten, im vorliegenden Ausführungsbeispiel Personen- und Adreßdaten, werden üblicherweise in Form einer oder mehreren Datenbanken organisiert und in einer Speichereinrichtung, üblicherweise einer oder mehrerer Festplatten, abgelegt. Die Speichereinrichtung selbst ist in Fig. 1 mit dem Bezugszeichen 26 gekennzeichnet, während die gespeicherte Datenbank das Bezugszeichen 27 hat. Diese Datenbank 27 wird nachfolgend als Benutzerdatenbank 27 bezeichnet. Die zuvor beschriebenen Komponenten, nämlich Server 22, Client-Station 24 und Speicher 26 stellen ein System dar, wie es bisher zur Speicherung und Pflege großer Datenbestände benutzt wurde. Die einzelnen Prozeduren zur Pflege der Datenbank 27 laufen hierbei auf dem Server 22 in bekannter Weise ab, so daß darauf nicht weiter eingegangen werden muß.

Das Datenverarbeitungssystem 10 umfaßt einen weiteren Rechner 28, der als Referenzadreß-Server 30 dient und nachfolgend kurz RA-Server genannt wird. In dem RA-Server 30 ist eine Speichereinrichtung vorgesehen, vorzugsweise in Form einer oder mehrerer Festplattensysteme. Die Speichereinrichtung ist in Fig. 1 schematisch dargestellt und mit dem Bezugszeichen 32 gekennzeichnet. In dieser Speichereinrichtung 32 ist eine Referenzdatenbank 34 abgelegt. In dieser Referenzdatenbank 34 sind im vorliegenden Ausführungsbeispiel sämtliche Personen und sämtliche Gebäude Deutschlands abgelegt.

Die Daten dieser Referenzdatenbank können beispielsweise von einem mobilen Datenträger 36, beispielsweise einem Datenband, durch den RA-Server 30 eingelesen und in der Speichereinrichtung 32 abgelegt werden.

Der mobile Datenträger 36 wurde von dem Provider mit der Referenzdatenbank 34' beschrieben, wobei der Provider hierfür das Datenverarbeitungssystem 14 einsetzt. Dieses Datenverarbeitungssystem 14 umfaßt üblicherweise einen Rechner 40, dem eine Speichereinrichtung 42, beispielsweise in Form einer oder mehrerer Festplatten, zugeordnet ist. Die Speichereinrichtung 42 umfaßt das Original 34' der Datenbank 34. Mit Hilfe des Rechners 40 ist es möglich, die Datenbank 34' auf den mobilen Datenträger 36 zu spielen.

Fig. 1 läßt noch erkennen, daß der Server 22 und der RA-Server 30 über ein lokales Netzwerk (LAN) 38 untereinander kommunizieren können.

An dieser Stelle ist nochmals festzuhalten, daß der RA-Server 30 im Bereich des Nutzers liegt und von dem Provider nicht erreichbar ist. Der Provider erhält somit keinerlei Information darüber, welche Daten über das Netzwerk 38 zwischen dem Server 22 und dem RA-Server 30 ausgetauscht werden und wird des weiteren auch nicht darüber informiert, auf welche Daten der Referenzdatenbank 34 zugegriffen wird.

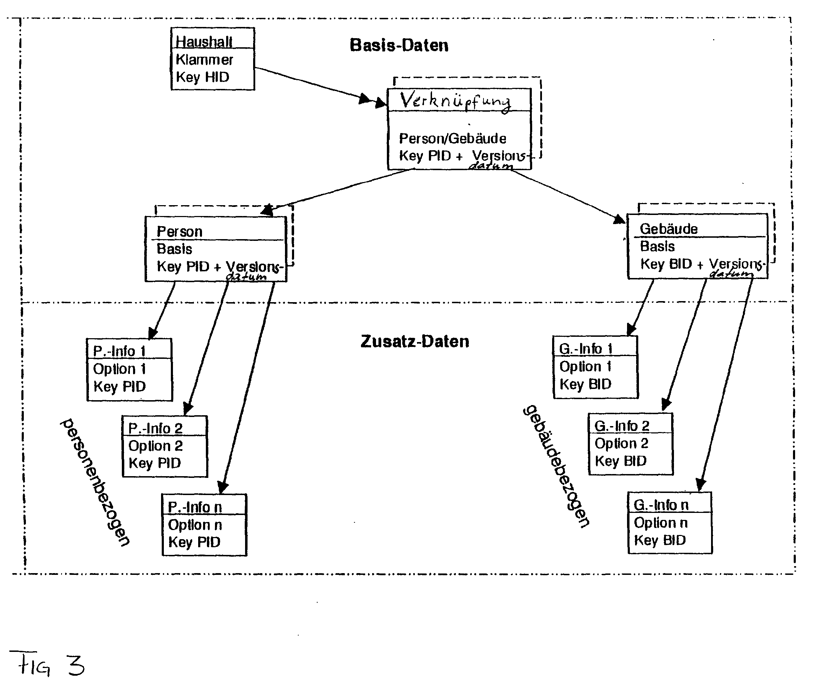

Wie bereits erwähnt, enthält die Referenzdatenbank 34 sämtliche Personen- und Gebäudedaten eines bestimmten Gebiets, beispielsweise Deutschlands. Mit Bezug auf die Fig. 3 soll nun kurz auf die Datenstruktur der Referenzdatenbank 34 eingegangen werden.

Zunächst gliedert sich die Datenbank 34 in zwei Datenbereiche, nämlich einerseits die sogenannten Basisdaten und andererseits sogenannte Zusatzdaten. Die Basisdaten umfassen einen Personen-Datenbestand und einen Gebäude-Datenbestand, wobei beide Datenbestände möglichst vollständig sein sollten. Der Personen-Datenbestand enthält eine Vielzahl von Datenobjekten, die jeweils aus einzelnen Daten bestehen. Ein Personen-Datenobjekt enthält einzelne zusammengehörende Daten, wie beispielsweise Vorname und Nachname. Des weiteren enthält jedes Personen-Datenobjekt einen eindeutigen Schlüssel PID und ein Versionsdatum. Zur späteren Verfolgung von Änderungen der Personen-Datenobjekte enthält der entsprechende Datenbestand auch die Historie zu jedem Personen-Datenobjekt. Die Verknüpfung der einzelnen Datenobjekte der Historie erfolgt über den eindeutigen Schlüssel PID, der sich auch bei Änderung des Namens einer Person, beispielsweise durch Heirat, nicht verändert.

Der Datenbestand der Gebäudedaten ist in gleicher Weise strukturiert und umfaßt eine Vielzahl von Datenobjekten, die einzelne Gebäudedaten, wie beispielsweise Postleitzahl, Ort, Straße etc., enthalten. Zur Kennzeichnung der einzelnen Datenobjekte ist ebenfalls ein eindeutiger Schlüssel BID jedem Datenobjekt zugeordnet. Des weiteren enthält jedes Gebäude-Datenobjekt ein Versionsdatum, um hierüber die Änderungen von Gebäude-Datenobjekten, beispielsweise durch Änderung von Straßennamen etc., zeitlich anhand der Historie nachvollziehen zu können.

Die Basisdaten umfassen des weiteren einen Verknüpfungs-Datenbestand, der eine Verknüpfung der Personen-Datenobjekte mit Gebäude-Datenobjekten vornimmt. Ein Verknüpfungs-Datenobjekt enthält folglich den Schlüssel PID eines Personen-Datenobjekts und den Schlüssel BID des entsprechenden Gebäude-Datenobjekts. Auch hier wird jedes Verknüpfungs-Datenobjekt mit einem Versionsdatum versehen, um die Änderungen der Datenobjekte zeitlich nachvollziehen zu können. Änderungen der Verknüpfungs-Datenobjekte sind beispielsweise dann vorzunehmen, wenn eine Person umzieht. Auf der Grundlage der Historie zu jedem Verknüpfungs-Datenobjekt lassen sich solche Änderungen verfolgen.

In Fig. 3 ist noch zu erkennen, daß die Basisdaten auch einen sogenannten Haushalts-Datenbestand aufweisen. Mit Hilfe dieses Datenbestandes werden die Personen zusammengefaßt, die in einem gemeinsamen Haushalt leben. Die einzelnen Datenobjekte dieses Haushalts-Datenbestandes enthalten somit neben den betroffenen Schlüsseln PID der Personen einen eigenen eindeutigen Schlüssel HID.

Der Bereich der Zusatzdaten umfaßt im vorliegenden Ausführungsbeispiel personenbezogene und gebäudebezogene Informationen, die in Form von Datenobjekten abgelegt sind. Die Verknüpfung der gebäudebezogenen und der personenbezogenen Datenobjekte erfolgt über den jeweiligen Schlüssel BID bzw. PID. Als personenbezogene Zusatzdaten kommen beispielsweise Geburtsdatum, Beruf, Telefonnummer, Kreditwürdigkeit etc. in Frage. Gebäudebezogene Zusatzdaten können beispielsweise Typ des Gebäudes, Art des Wohngebiets etc. sein. Selbstverständlich sind auch andere Zusatzdaten denkbar.

Das Sammeln der Basisdaten und ein entsprechender Aufbau der Referenzdatenbank 34' erfolgt beim Provider. Der Provider ist zudem für die Pflege der Referenzdatenbank 34' zuständig. Die Zusatzdaten können ebenfalls von dem Provider geliefert werden oder aber von anderen Daten-Providern (Fremd-Provider), die die vom Provider vorgegebenen Schlüssel verwenden, um eine eindeutige Verknüpfung der Datenbestände zu ermöglichen. Alternativ ist es denkbar, daß der Provider eine Zuordnungstabelle von Schlüsseln des Fremd-Providers auf die entsprechenden Schlüssel des Providers führt. In diesem Fall muß der Fremd-Provider nicht die Schlüssel des Providers einsetzen.

Wie bereits erwähnt, wird die vom Provider erstellte Referenzdatenbank 34' auf einen mobilen Datenträger 36 gespielt und dem Kunden/Nutzer übermittelt, der diese Daten dann in die Speichereinrichtung 32 seines Datenverarbeitungssystems 10 überträgt.

Zur Erläuterung der Funktionsweise des Datenverarbeitungssystems 10 soll zunächst unter Bezugnahme auf die Fig. 2 und das dort gezeigte Funktionsblockdiagramm der funktionelle Aufbau des RA-Servers 30 erläutert werden.

Der RA-Server 30 umfaßt eine Steuereinheit 50, die die Steuerung unterschiedlicher Funktionen und Komponenten übernimmt. Mit der Steuereinheit 50 ist ein Lesegerät 52 verbunden, das zum Lesen des mobilen Datenträgers 36 geeignet ist. Ferner ist eine Schnittstelle 54 vorgesehen, die eine Datenkommunikation zwischen der Steuereinheit 50 und der Speichereinrichtung 32 ermöglicht. Darüber hinaus ist die Schnittstelle 54 auch dazu ausgelegt, eine Verbindung zum Internet 18 herzustellen. Die von der Speichereinrichtung 32 ausgelesenen Daten werden einer Entschlüsselungseinheit 56 zugeführt, um eine Entschlüsselung nach einem fest vorgegebenen, für den Nutzer weder bekannten noch veränderbaren Schlüssel vorzunehmen. Die verschlüsselte Speicherung der Referenzdatenbank 34 in der Speichereinrichtung 32 soll einen Export der Daten und eine datenschutzrechtlich nicht erlaubte Nutzung verhindern.

Zur Verbindung mit dem lokalen Netzwerk 38 weist der RA-Server 30 eine weitere Schnittstelle 58 auf, die eine Datenkommunikation zwischen dem Server 22 und der Steuereinheit 50 ermöglicht.

Optional kann eine Codier-/Decodier-Einheit 60 (kurz Codec-Einheit genannt) vorgesehen sein, die bestimmte Daten eines Datenobjekts, nämlich die jeweiligen Schlüssel, nach einem in einem Festwertspeicher 62 abgelegten Schema codiert bzw. decodiert. Die Codec-Einheit 60 soll verhindern, daß die in der Referenzdatenbank 34 enthaltenen Schlüssel direkt vom Nutzer verwendet werden können. Der Provider kann somit durch unterschiedliche im Speicher 62 abgelegte Codierschemata den Abgleich unterschiedlicher Benutzerdatenbanken auf der Grundlage der Schlüssel verhindern, da die Schlüssel benutzerabhängig sind.

Das Datenverarbeitungssystem 10 ermöglicht nun die nachfolgend angegebene Nutzung der Referenzdatenbank 34:

Wie bereits erwähnt, umfaßt die Bewirtschaftung von Datenbeständen unter anderem die Verifizierung, die Anreicherung und die Aktualisierung von Daten. Ziel der Verifizierung ist es, zu überprüfen, ob eine Person unter einer Adresse postalisch erreichbar ist, falls ja, ob Anschrift und Name der Person korrekt geschrieben sind, und falls nein, die Zurverfügungstellung der korrekten Schreibweise.

Bei der Anreicherung werden die Daten der Benutzerdatenbank 27 durch zusätzliche Informationen angereichert, wie beispielsweise personenbezogene Daten, Telefon, e-mail, Bonität ...) oder statistische Daten (Marketingzelle, ...) etc.

Die Aktualisierung hat zum Ziel, Änderungen von Daten zeitnah zu verfolgen und in die Benutzerdatenbank zu übernehmen. Änderungen der Daten entstehen beispielsweise auf der Adressenebene durch Straßenumbenennungen, Hausnummernänderungen, Gemeindegebietsreformen usw., auf der Personenebene durch Heirat, Tod usw., auf der Ebene der Zuordnung von Anschrift und Person durch Umzüge und durch Änderung angereicherter Informationen.

Zusätzlich zu den vorgenannten Aufgaben besteht seitens des Nutzers auch der Wunsch, unternehmensweit gespeicherte Daten zu einem Bild des Kunden zu verknüpfen, um ein realistisches Bild des Kunden zu gewinnen, auch wenn die Daten über unterschiedliche Kanäle kamen und keine eindeutige Kundennummer enthalten.

Zur Ausführung der vorgenannten Funktionen ist es zunächst erforderlich, daß die Benutzerdatenbank 27 gegen die Referenzdatenbank 34 abgeglichen wird, wobei jedes Datenobjekt der Benutzerdatenbank mit einem entsprechenden Schlüssel aus der Referenzdatenbank versehen wird. Darüber hinaus werden Adreßoder Personendaten aus der Benutzerdatenbank entsprechend korrigiert, falls Fehler festgestellt werden. Der für eine solche Bestands-Bewertung notwendige Datenfluß zwischen Server 22 und RA-Server 30 wird unter anderem von der Steuereinheit 50 gesteuert. Die Steuereinheit 50 empfängt vom Server 22 das Personen- und Adreßdatum und sucht dieses Datum in der Referenzdatenbank 34. Wird es gefunden, liest die Steuereinheit 50 den zugehörigen Schlüssel (PID, BID und/oder HID) aus und übermittelt diese Information an den Server 22 zur Speicherung in der Benutzerdatenbank 27. Beim Erfassen eines Fehlers in einem Adreß- oder Personendatum wird das richtige Referenzdatum zusätzlich mit den entsprechenden Schlüsseln an den Server 22 zurückgeliefert.

Die vorgenannte Bestands-Bewertung erfolgt üblicherweise in einem Batchlauf und wird beispielsweise nur dann ausgeführt, wenn eine vollständig neue Benutzerdatenbank 27 aufgebaut wird.

Aktualisierungen der Benutzerdatenbank während des Betriebs des Datenverarbeitungssystems 10 erfolgen beispielsweise dadurch, daß online, beispielsweise über das Internet 18, die geänderten Datenobjekte (Deltas) vom Provider 16 übermittelt und in die Referenzdatenbank 34 aufgenommen werden. Anschließend wird die Benutzerdatenbank 27 mit Hilfe der Referenz-IDs und des Versionsdatums aktualisiert. Welche Referenz-IDs mit welchem Versionsdatum in der Benutzerdatenbank gespeichert sind, ist dem RA-Server 30 entweder von vorherigen Anfragen bekannt oder es werden alternativ sämtliche in der Benutzerdatenbank gespeicherten Referenz-IDs mit zugehörigem Versionsdatum vom Benutzer im Batch unmittelbar vor der gewünschten Aktualisierung an den RA-Server 30 übertragen. Diese Aktualisierung gestaltet sich einfach, da die Suche nach zu verändernden Datenobjekten alleine auf der Basis der eindeutigen Schlüssel ablaufen kann. Ein Vergleich von Adreßdaten oder Personendaten ist somit nicht erforderlich. Neben der Lieferung dieser veränderten Referenzdaten per Online ist es selbstverständlich auch möglich, die Daten auf einem mobilen Datenträger an den Nutzer zu übermitteln. Bei größeren Datenmengen ist dieser Weg aus Kostengründen zu bevorzugen.

Neben dieser auch als passive Bestands-Veränderung bezeichneten Aktualisierung der Benutzerdatenbank wird auch eine aktive Bestands-Veränderung vorgenommen, nämlich dann, wenn neue Adreßoder Personendaten über die Station 24 in das System eingegeben werden oder wenn bestimmte Daten der Benutzerdatenbank 34 über diesen Weg geändert werden.

Bei Eingabe einer neuen Adresse sorgt der RA-Server 30 für eine Verifizierung der Daten. Das heißt, daß die der Steuereinheit 50 übermittelten Daten in der Referenzdatenbank 34 fehlertolerant gesucht werden. Falls eine Übereinstimmung mit einem Referenz-Datenobjekt festgestellt wird, gibt die Steuereinheit 50 zumindest den zugehörenden Schlüssel (PID, BID, HID) an den Server 22 zurück. Sollte die Steuereinheit 50 einen Fehler in dem eingegebenen Datum/Datenobjekt feststellen, wird das richtige Datum/Datenobjekt aus der Referenzdatenbank zurückgeliefert.

Bei geringen Datenmengen läßt sich diese aktive Bestands-Veränderung interaktiv durchführen. Das heißt der Benutzer erfährt an seiner Station 24 beispielsweise noch während der Eingabe, ob die eingegebenen Daten korrekt sind.

Diese interaktive Verarbeitung kann auch dazu eingesetzt werden, die Eingabe bestimmter Daten an der Station 24 dadurch zu erleichtern, daß der RA-Server 30 ein Datenobjekt zurück liefert, noch bevor die Eingabe vollständig erfolgte, sofern eine eindeutige Zuordnung in der Referenzdatenbank möglich ist. Der Server 22 kann in diesem Fall beispielsweise die in einer Eingabemaske noch nicht ausgefüllten Felder auffüllen.

Wird bei der Gestaltung der Eingabemaske eine bestimmte Reihenfolge der einzugebenden Daten eingehalten, kann durch die vorgenannte interaktive Verarbeitung im Schnitt die Anzahl der einzugebenden Zeichen für eine Adresse um über die Hälfte reduziert werden. Die Reihenfolge der Eingabe sieht wie folgt aus: Name, Postleitzahl, Hausnummer, Straße, Ort. Während der Eingabe der Daten wird entweder nach der Eingabe jedes Zeichens oder in geeigneten Abständen gegenüber den Referenzdaten der Referenzdatenbank 34 überprüft, ob die Eingabe eindeutig zu einer Verbindung, Person (oder Firma) und Gebäude paßt. Ist dies der Fall, dann ist die Adresse identifiziert und kann ausgegeben werden. Der Server 22 wird in diesem Fall die in der Eingabemaske noch nicht ausgefüllten Felder auffüllen. Passen die bisher eingegebenen Zeichen zu keiner Verbindung Person und Gebäude (weder mehrdeutig noch eindeutig), so kann die weitere Überprüfung der Eingabe ab diesem Zeitpunkt eingestellt werden, da vermutlich ein Erfassungsfehler in den bereits eingegebenen Daten vorliegt. In diesem Fall wird nach der kompletten Eingabe ein normaler fehlertoleranter Abgleich (wie bereits beschrieben) gegen die Referenzdaten der Referenzdatenbank 34 durchgeführt. Damit läßt die interaktive Verarbeitung die Schnelleingabe von Daten zu.

Über die Station 24 kann der Benutzer darüber hinaus zu bestimmten in der Benutzerdatenbank enthaltenen Daten Zusatzdaten anfordern, die von dem RA-Server 30 aus der Referenzdatenbank 34 ausgelesen und über das Netzwerk 38 dem Server 22 übermittelt werden.

Bei Bedarf ist es möglich, eine Protokollierung des Zugriffs auf den Basisdatenbereich und/oder den Zusatzdatenbereich der Referenzdatenbank 34 durchzuführen, um beispielsweise über diese Information eine Abrechnung vorzunehmen. Die Abrechnungsdaten könnte der RA-Server 30 dann beispielsweise über das Internet 18 an den Provider, d.h. das Datenverarbeitungssystem 14, übermitteln.

Da der Provider eine Vollständigkeit der Referenzdatenbank nicht garantieren kann, ist zwischen dem RA-Server 30 und dem Server 40 des Providers 16 ein Rückkanal vorgesehen, der beispielsweise das Internet 18 nutzt. Über diesen Rückkanal werden Datenobjekte aus der Benutzerdatenbank zu dem Provider übertragen, die der RA-Server keinem Referenzdatenobjekt zuordnen kann. Der Provider 16 ist in diesem Fall dann in der Lage, eine weitere Prüfung des übermittelten Datenobjekts vorzunehmen. Diese Prüfung kann unter Umständen Einfluß auf die Referenzdatenbank haben und beispielsweise zu einem zusätzlichen Eintrag in der Referenzdatenbank führen, der über den Rückkanal an den RA-Server übermittelt wird.

Wie zuvor erwähnt, sorgt der Provider 16 dafür, daß die Referenz-IDs im wesentlichen stabil bleiben. Dennoch kann es immer wieder zu Fällen kommen, bei denen eine Änderung bestehender Referenz-IDs notwendig wird. Solche Änderungen der Referenz-IDs sind bei dem beschriebenen System grundsätzlich erlaubt, allerdings nur durch den Provider 16. Der Nutzer hingegen hat auf die Gestaltung der Referenz-IDs keinen Einfluß.

Zusammenfassend zeigt sich, daß das beschriebene Datenverarbeitungssystem 10, insbesondere der RA-Server 30, eine Bewirtschaftung von Benutzerdatenbanken zuläßt, die auch strengen datenschutzrechtlichen Forderungen standhält. So ist es aufgrund der verschlüsselten Speicherung der Referenzdaten und der Zugriffseinrichtung 30 möglich, eine umfassende Referenzdatenbank an den Nutzer zu liefern, da ein Exportieren von Daten oder ein Ausspähen der Referenzdatenbank nicht möglich ist. Darüber hinaus ermöglicht die Verwendung von eindeutigen Schlüsseln eine schnelle Abarbeitung im Falle der passiven Bestands-Veränderung, da aufwendige Datenvergleiche nicht mehr erforderlich sind.

Am Ende soll noch darauf hingewiesen werden, daß der Durchschnittsfachmann die in Fig. 2 gezeigten Funktionsblöcke, beispielsweise Entschlüsselungseinheit 56, Codec-Einheit 60, Schnittstellen 58, 54 oder Steuereinheit 50, sowohl als Hardware als auch als Software realisieren kann. Bevorzugt werden die vorgenannten Funktionsblöcke in Form von Softwareprozeduren bzw. Modulen in einem Rechnersystem implementiert.

## Patentansprüche

1. Datenverarbeitungssystem zur Bewirtschaftung von in zumindest einer Datenbank (Benutzerdatenbank) (27) organisierten Datenbeständen eines Nutzers, die insbesondere Adreßund/ oder Personendaten umfassen, mit
einer Rechnereinrichtung (22) zur Verarbeitung von Daten;
einer ersten Speichereinrichtung (26), die der Rechnereinrichtung (22) zugeordnet und zur Speicherung der Benutzerdatenbank (27) ausgelegt ist,
einer zweiten Speichereinrichtung (32), die zur Speicherung einer Referenzdatenbank (34) ausgelegt ist, und
einer Zugriffseinrichtung (30) zur Steuerung der Zugriffe auf die Referenzdatenbank (34) auf der Grundlage eines angefragten Datums und zur Steuerung des Auslesens von aus einzelnen Daten bestehenden Datenobjekten aus der Referenzdatenbank, **dadurch gekennzeichnet, daß**
die Zugriffseinrichtung (30) derart ausgebildet ist, daß sie ein Datenobjekt aus der Referenzdatenbank (34) nur dann ausliest, wenn eine Übereinstimmung zwischen dem angefragten Datum und einem entsprechendem Datum des Datenobjekts festgestellt wird, und
die Zugriffseinrichtung (30) und die zweite Speichereinrichtung (34) im lokalen Bereich (12) des Nutzers liegen.

2. Datenverarbeitungssystem nach Anspruch 1, **dadurch gekennzeichnet, daß** die Zugriffseinrichtung (30) eine Entschlüsselungsvorrichtung (56) zur Entschlüsselung der in der zweiten Speichereinrichtung (32) verschlüsselt abgelegten Daten der Referenzdatenbank (34) umfaßt.

3. Datenverarbeitungssystem nach Anspruch 1 oder 2, **dadurch gekennzeichnet, daß** die Zugriffseinrichtung (30) ein Lesegerät (52) zum Einlesen von Daten von einem mobilen Datenträger (36) in die zweite Speichereinrichtung (32) umfaßt.

4. Datenverarbeitungssystem nach einem der vorhergehenden Ansprüche, **dadurch gekennzeichnet, daß** ein Mittel (50) zur eindeutigen Kennzeichnung eines Datenobjekts der Benutzerdatenbank durch eine Referenz-ID (PID, HID, BID) vorgesehen ist, die in der Referenzdatenbank (34) dem jeweiligen Datenobjekt zugeordnet ist.

5. Datenverarbeitungssystem nach einem der vorhergehenden Ansprüche, **dadurch gekennzeichnet, daß** die Zugriffseinrichtung (30) ein Mittel (50) zur vorzugsweise fehlertoleranten Suche eines angefragten Datums in den Datenobjekten der Referenzdatenbank (34) und zur Ausgabe des gefundenen Datenobjekts umfaßt.

6. Datenverarbeitungssystem nach einem der vorhergehenden Ansprüche, **dadurch gekennzeichnet, daß** die Zugriffseinrichtung (30) ein Mittel (60) zur Codierung der Referenz-ID der Referenzdatenbank umfaßt, wobei die Codierung nach einem vom Benutzer nicht veränderbaren Schema erfolgt.

7. Verfahren zur Bewirtschaftung von in zumindest einer Datenbank (Benutzerdatenbank) organisierten Datenbeständen eines Nutzers, die insbesondere Adreß- und/oder Personendaten umfassen, mit den Schritten:
Speichern der Benutzerdatenbank in einer ersten Speichereinrichtung,
Speichern einer Referenzdatenbank in einer zweiten Speichereinrichtung, wobei die zweite Speichereinrichtung im lokalen Bereich des Benutzers liegt, und
Steuern der Zugriffe auf die Referenzdatenbank auf der Grundlage eines angefragten Datums und Steuern des Auslesens von aus einzelnen Daten bestehenden Datenobjekten aus der Referenzdatenbank, wobei das Steuern derart ausgeführt wird, daß ein Datenobjekt aus der Referenzdatenbank nur dann ausgelesen wird, wenn eine Übereinstimmung zwischen dem angefragten Datum und einem entsprechenden Datum des Datenobjekts festgestellt wird.

8. Verfahren nach Anspruch 7, **dadurch gekennzeichnet, daß** jedem Datenobjekt der Benutzerdatenbank eine eindeutige Referenz-ID zugeordnet wird, die für dieses Datenobjekt in der Referenzdatenbank enthalten ist.

9. Verfahren nach Anspruch 8, **dadurch gekennzeichnet, daß** die in der Referenzdatenbank enthaltene Referenz-ID beim Auslesen nach einem vorgegebenen Schema in eine benutzerabhängige eindeutige neue Referenz-ID codiert wird.

10. Verfahren nach Anspruch 7, 8 oder 9, **dadurch gekennzeichnet, daß** die Datenobjekte beim Auslesen aus der Referenzdatenbank entschlüsselt werden.

11. Verfahren nach einem der vorhergehenden Ansprüche 7 bis 10, **dadurch gekennzeichnet, daß** bei Eingabe eines Datums oder Datenobjekts, vorzugsweise Personen- und Adreßangaben, in der Referenzdatenbank nach diesem Datum/Datenobjekt vorzugsweise fehlertolerant gesucht wird; eine Statusmeldung darüber generiert wird, ob das Datum/Datenobjekt eindeutig gefunden, mehrdeutig gefunden oder nicht gefunden wurde; und das in der Referenzdatenbank enthaltene Datum/Datenobjekt ausgegeben wird, falls sich das eingegebene Datum/Datenobjekt von dem Datum/Datenobjekt in der Referenzdatenbank unterscheidet.

12. Verfahren nach Anspruch 11, **dadurch gekennzeichnet, daß** die dem eingegebenen Datum/Datenobjekt in der Referenzdatenbank zugeordneten Daten ausgegeben werden.

13. Verfahren nach einem der vorhergehenden Ansprüche 7 bis 12, **dadurch gekennzeichnet, daß** die in der Benutzerdatenbank enthaltenen Daten anhand der in der Referenzdatenbank enthaltenen Daten aktualisiert werden.

14. Verfahren nach Anspruch 8, **dadurch gekennzeichnet, daß** es für mehrere Benutzerdatenbanken ausgeführt wird und daß diese Benutzerdatenbanken anschließend über die gemeinsame Referenz-ID miteinander verknüpft werden.

15. Verfahren nach einem der vorhergehenden Ansprüche 7 bis 14, **dadurch gekennzeichnet, daß** die Referenzdatenbank Personen-, Haushalts- und Gebäude-Daten enthält, die miteinander verknüpft sind, und daß diesen Daten jeweils eine eigene eindeutige Referenz-ID zugeordnet ist.

16. Verfahren nach einem der vorhergehenden Ansprüche 7 bis 15, **dadurch gekennzeichnet, daß** zu jedem der Personen-, Haushalts- und Gebäude-Daten eine Historie abgespeichert wird, um Änderungen der Daten verfolgen zu können.

17. Verfahren nach Anspruch 11 und 16, **dadurch gekennzeichnet, daß** die Suche in der Referenzdatenbank auch in der Historie durchgeführt wird.

18. Verfahren nach Anspruch 17, **dadurch gekennzeichnet, daß** die aktuellen Daten ausgegeben werden, wenn die Suche in der Historie zu einer Übereinstimmung führt.
